# EUROPEAN PATENT APPLICATION

(11) **EP 2 014 426 A2**
(43) Date of publication of application: **14.01.2009**
(21) Application number: 08009655.5
(22) Date of filing: 27.05.2008
(51) Int. Cl.: B25J 9/16

(54) **Machining robot control apparatus**

(30) Priority: 30.05.2007 JP 2007143383
(71) Applicant: Fanuc Ltd, Yamanashi 401-0597 (JP)
(72) Inventor: Nihei, Ryo, Oshino-mura, Minamitsuru-gun Yamanashi, 401-0597 (JP); Kato, Tetsuaki, Oshino-mura, Minamitsuru-gun Yamanashi, 401-0597 (JP); Kuroshita, Teruki, Oshino-mura, Minamitsuru-gun Yamanashi, 401-0511 (JP)
(74) Representative: Thum, Bernhard

(57) **Abstract**

A control apparatus (10) for a machining robot (1) adapted to machine a workpiece (20) by coming into contact with an effector (19) of a tool (18) attached to the machining robot with the workpiece comprises: detecting means (15) for detecting a force or moment acting between the effector of the tool and the workpiece; converting means (22) for converting the force or moment detected by the detecting means into a force or moment acting on the joint axis of the machining robot; deflection calculating means (25) for calculating a deflection occurring at the joint axis of the machining robot on the basis of the force or moment acting on the joint axis of the machining robot and obtained from the converting means; and correcting means (28) for correcting at least one of a position command or a speed command for the joint axis of the machining robot in such a manner as to compensate for the deflection calculated by the deflection calculating means. Accordingly, the position of the robot is accurately corrected without being affected by the deflection of the joint axis.

## Description

### BACKGROUND OF THE INVENTION

### 1. Field of the Invention

The present invention relates to a control apparatus for an articulated robot. Specifically, the invention relates to a control apparatus for a machining robot that performs machining operations such as friction welding or grinding on a workpiece.

### 2. Description of the Related Art

Machining a workpiece by using a tool attached to an articulated robot, is known in the prior art and it is desirable to avoid application of excessive force to the workpiece by previously detecting the tool coming into contact with the workpiece.

In the control apparatus disclosed in Japanese Unexamined Patent Publication No. 2005-125427 and Japanese Patent No. 2718688, the position of the robot is corrected by a task coordinate system in order to avoid application of excessive force to the workpiece. The control apparatus disclosed in Japanese Unexamined Patent Publication No. 2005-125427 and Japanese Patent No. 2718688 are intended to be used in a case where the movement of the tool of the robot is relatively small, for example, when performing spot welding or seam welding.

However, if the force acting between the tool and the workpiece is relatively large, for example, when performing friction welding or grinding, the joint axis of the robot may deflect when the tool comes into contact with the workpiece.

When such a deflection occurs, the position of the tool may become displaced from its intended position due to the deflection of the joint axis. Accordingly, in the case of the control apparatus disclosed in Japanese Unexamined Patent Publication No. 2005-125427 and Japanese Patent No. 2718688, a situation can occur where the position of the robot cannot be accurately corrected.

The present invention has been accomplished in view of the above situation, and an object of the invention is to provide a control apparatus that can accurately correct the position of the robot even when the force acting between the tool of the robot and the workpiece is relatively large.

### SUMMARY OF THE INVENTION

To achieve the above object, according to a first aspect, there is provided a control apparatus for a machining robot having at least one joint axis and adapted to machine a workpiece by coming into contact with an effector of a tool attached to the machining robot with the workpiece, comprising: detecting means for detecting a force or moment acting between the effector of the tool and the workpiece; converting means for converting the force or moment detected by the detecting means into a force or moment acting on the joint axis of the machining robot; deflection calculating means for calculating a deflection occurring at the joint axis of the machining robot on the basis of the force or moment acting on the joint axis of the machining robot and obtained from the converting means; and correcting means for correcting at least one of a position command or a speed command for the joint axis of the machining robot in such a manner as to compensate for the deflection calculated by the deflection calculating means.

In other words, in the first aspect, the position command and/or the speed command of the robot are corrected based on the calculated deflection of the joint axis. Accordingly, even when the force acting between the tool of the robot and the workpiece is relatively large, for example, when performing friction welding or grinding, the position of the robot can be accurately corrected without being affected by the deflection of the joint axis, which can considerably improve the trajectory of the robot.

According to a second aspect, which refers back to the first aspect, the detecting means is a force sensor attached to the tool of the robot.

Preferably, the force sensor according to the second aspect is a six-axis force sensor capable of detecting forces acting in three directions and moments generated about the three directions.

According to a third aspect, which refers back to the first aspect, the tool is equipped with an actuator, and force feedback or torque feedback provided by the actuator of the tool is used when detecting the force or moment acting between the effector of the tool and the workpiece.

In other words, in the third aspect, the position of the robot can be corrected more accurately.

According to a fourth aspect, which refers back to the first or second aspect, a parameter uniquely defined in relation to a direction in a coordinate system defined with respect to the tool is used when detecting the force or moment acting between the effector of the tool and the workpiece.

In other words, the fourth aspect is advantageous if the tool is a grinder.

According to a fifth aspect, which refers back to the first or second aspect, a parameter uniquely defined in relation to a direction in a coordinate system defined based on the moving direction of the tool is used when detecting the force or moment acting between the effector of the tool and the workpiece.

In other words, the fifth aspect is advantageous when the tool is used for friction welding.

According to a sixth aspect, which refers back to any one of the first to fifth aspect, if the moving speed of the machining robot is smaller than a threshold value, the amount of compensation by which to correct the position command or speed command is reduced according to the moving speed.

According to a seventh aspect, which refers back to any one of the first to fifth aspects, if the distance from the action start point or end point of the robot is smaller than a corresponding threshold value, the amount of compensation by which to correct the position command or speed command is reduced according to the distance.

According to an eighth aspect, which refers back to any one of the first to fifth aspect, if the length of time elapsed from the action start time or a length of time until action end time of the robot is smaller than a corresponding threshold value, the amount of compensation by which to correct the position command or speed command is reduced according to the length of time.

According to a ninth aspect, the control apparatus as defined in any one of the first to fifth aspect, further comprises compensation amount maximum value limiting means for limiting an maximum value for the amount of compensation by which to correct the position command or speed command.

In other words, according to the sixth to ninth aspect, the position command or speed command is prevented from being corrected excessively.

These and other objects, features, and advantages of the present invention will become more fully apparent from the detailed description of typical embodiments as set forth below with reference to the accompanying drawings.

### BRIEF DESCRIPTION OF THE DRAWINGS

Figure 1 is a functional block diagram of a control apparatus for a machining robot according to the present invention.
Figure 2 is a flowchart illustrating the operation of the control apparatus shown in Figure 1.
Figure 3a is a diagram showing a coordinate system defined with respect to a tool.
Figure 3b is a diagram showing a coordinate system defined based on the moving direction of the tool.
Figure 4 is a diagram showing a flowchart when the amount of compensation is adjusted.
Figure 5 is a diagram showing the relationship between time and speed when the robot moves.
Figure 6 is a diagram showing a flowchart when the amount of compensation is adjusted.

### DETAILED DESCRIPTION

Embodiments of the present invention will be described below with reference to the accompanying drawings. Throughout the drawings, like component members are designated by like reference numerals. Further, for ease of understanding, the scale of the drawings has been changed.

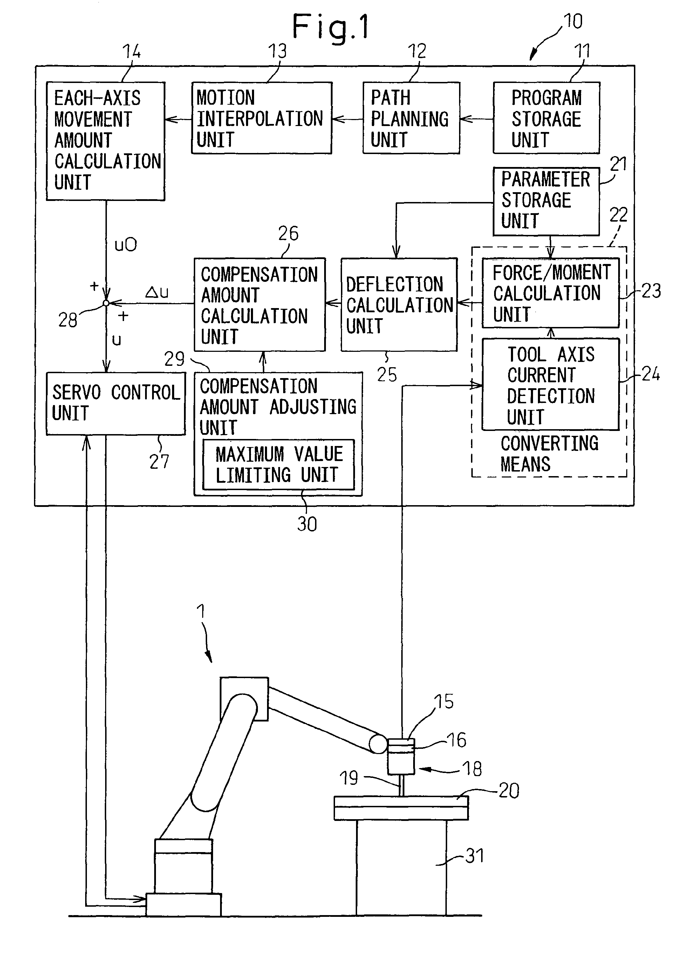

Figure 1 is a functional block diagram of a control apparatus for a machining robot according to the present invention. As shown in Figure 1, the control apparatus 10 is connected to the robot 1 which is, for example, a vertical articulated robot of a six-axis configuration. A tool 18 is attached to the forword end of an arm of the robot 1. In Figure 1, the tool 18 is one used for friction welding and includes an effector 19. The effector 19 is brought into contact with a workpiece 20 fixed on a support base 31 and machines the workpiece 20. A tool 18 intended for another purpose, for example, a grinder, may be used.

As shown, a six-axis force sensor 15 is placed between the tool 18 and the arm of the robot 1. The six-axis force sensor 15 can detect forces acting in three mutually perpendicular directions and moments generated about the three directions. The tool 18 is driven by a motor 16. As shown, the motor 16 and six-axis force sensor 15 are connected to a converting means 22 in the control apparatus 10.

The control apparatus 10 is a digital computer, and includes a program storage unit 11 for storing various programs and a parameter storage unit 21 for storing various parameters or threshold values. The parameter storage unit 21 stores dynamics parameters relating to the robot 1, for example, the dimensions, etc. of the robot 1. Further, the parameter storage unit 21 prestores the spring constant of each joint axis of the robot 1 when the joint axes are regarded as a spring. The parameter storage unit 21 can also temporarily store the amount of compensation for each interpolation cycle implemented, for example, by a motion statement in a program stored in the program storage unit 11.

As shown in Figure 1, the control apparatus 10 includes a path planning unit 12 which, during the playback of a program stored in the program storage unit 11, creates the robot trajectory, based on such information as the start position, end position, moving speed, interpolation method, etc. defined by a motion statement in the program. The control apparatus 10 further includes a motion interpolation unit 13 which creates the orthogonal position of the tool 18 for each interpolation cycle, based on the trajectory created by the path planning unit 12. Further, a each-axis movement amount calculation unit 14 in the control apparatus 10 calculates the position of each joint axis of the robot 1 corresponding to the orthogonal position of the tool 18. The each-axis movement amount calculation unit 14 further calculates the amount of movement of each joint axis for each interpolation cycle, and supplies it as a position command or speed command to a servo control unit 27.

The converting means 22 contained in the control apparatus 10 includes a tool axis current detection unit 24 which detects current flowing in the motor 16 of the tool 18. Since the torque of the motor 16 for driving the tool 18 is proportional to the current flowing in the motor 16, the torque of the motor 16 can be found by detecting the current. The converting means 22 further includes a force/moment calculation unit 23 which calculates the force and/or moment acting on each joint axis of the robot 1 on the basis of the current detected by the tool axis current detection unit 24 and a parameter stored in the parameter storage unit 21.

Further, as shown, the control apparatus 10 includes a deflection calculating means 25 for calculating the deflection of each joint axis of the machining robot 1 on the basis of the force or moment obtained from the converting means 22. The control apparatus 10 further includes a compensation amount calculation unit 26 for calculating an amount compensation which compensates for the deflection calculated by the deflection calculating means 25. As will be described later, if the amount of compensation calculated by the compensation amount calculation unit 26 is relatively large, the amount of compensation may be adjusted by a compensation amount adjusting unit 29.

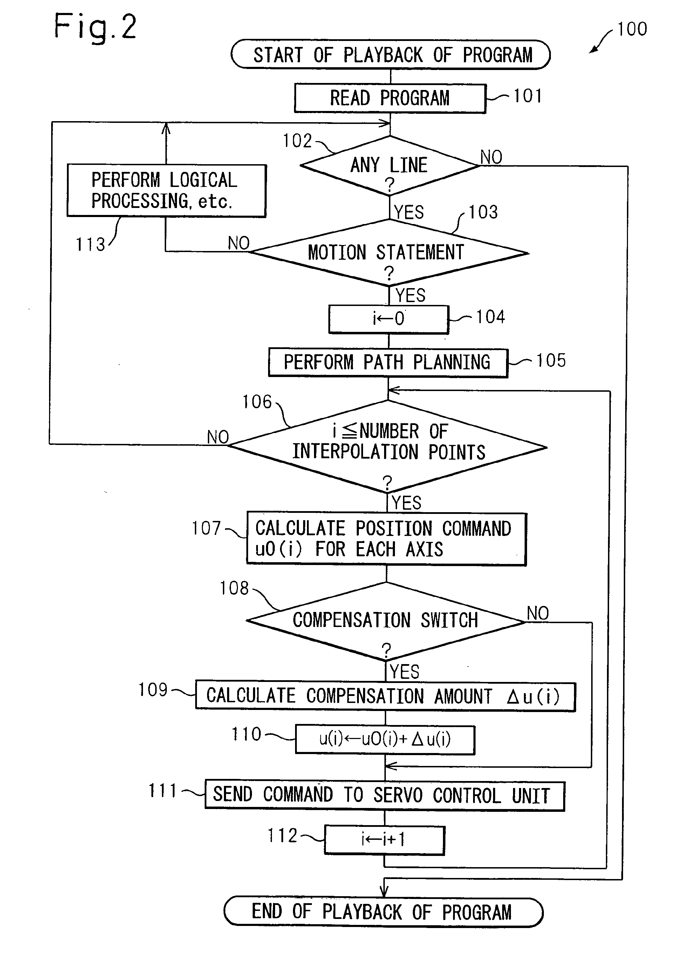

Figure 2 is a flowchart illustrating the operation of the control apparatus shown in Figure 1. The operation of the machining robot control apparatus 10 according to the present invention will be described below with reference to Figure 2. First, a predetermined program is read out of the program storage unit 11 (step 101), and it is determined whether there is any line in the program (step 102); if there is any line, the selected line is executed. If there is no line, the process is terminated.

Then, it is determined whether the line contains a motion statement (step 103). If it contains the motion statement, an interpolation-cycle counter i is set to zero, and path planning is performed by the path planning unit 12 (steps 104 and 105). If the line does not contain any motion statement, logical processing relating to that line is performed (step 113), and the process proceeds to the next line.

As described above, the path planning unit 12 creates the robot trajectory, based on such information as the start position, end position, moving speed, interpolation method, etc. defined by the motion statement in the program. Further, the path planning unit 12 determines the number of interpolation points for the robot trajectory. For example, if the length of the robot trajectory created is 1 meter, and the minimum moving distance of the robot is 1 centimeter, the number of interpolation points is 100.

Then, it is determined whether the current interpolation-cycle counter i exceeds the number of interpolation points (step 106). If the interpolation-cycle counter i exceeds the number of interpolation points, it is determined that the processing for that line is completed, and the process returns to step 102.

However, if the interpolation-cycle counter i does not exceed the number of interpolation points, the process proceeds to step 107. In step 107, each-axis movement amount calculation unit 14 calculates the position command u0(i) for each joint axis of the machining robot 1. More specifically, each-axis movement amount calculation unit 14 creates the position command u0(i) to the servo control unit by taking into account the current position of each robot axis [J1(i), J2(i), J3(i), J4(i), J5(i), J6(i)] and the reduction ratio of the speed reducer (not shown).

In this connection, when creating the speed command, differences (J1(i)-J1(i-1), J2(i)-J2(i-1), J3(i)-J3(i-1), J4 (i)-J4 (i-1), J5 (i)-J5 (i-1), J6 (i)-J6 (i-1)) are calculated between the previous positions of the respective joint axes (J1(i-1), J2(i-1), J3(i-1), J4(i-1), J5(i-1), J6(i-1)) and the current positions of the respective joint axes (J1(i), J2(i), J3(i), J4(i), J5(i), J6(i)). Then, based on these differences, the each-axis movement amount calculation unit 14 creates the speed command for each axis by taking into account the reduction ratio of the speed reducer.

After that, in step 108, it is determined whether there is a compensation switch (compensation instruction) in the program, and if the compensation switch is enabled, the process proceeds to step 109 to calculate the amount of compensation. However, if the compensation switch is not enabled, the position command u0(i) for each axis is determined as an effective position command u(i) and supplied to the servo control unit 27 (step 111).

The amount of compensation is calculated in the following manner. The tool axis current detection unit 24 calculates the current flowing in the motor 16. Then, the force/moment calculation unit 23 multiplies the current by a conversion matrix J to convert it into the force/moment acting on the tool 18.

The conversion matrix J is calculated by applying a least square method to a history of the forces detected in the three directions of the machining robot 1 and the moments detected about the three directions by the six-axis force sensor 15 during the operation of the machining robot 1. It is assumed that the conversion matrix J thus calculated is prestored in the parameter storage unit 21. In this connection, when executing the program, the six-axis force sensor 15 may be removed from the tool 18. When the six-axis force sensor 15 is not removed, the output of the sensor 15 may be directly input to the deflection calculating means 25 during the execution of the program. Further, the sensor may be attached in advance, and the program may be executed to record the amount of compensation for each interpolation cycle. In this case, when executing the program by removing the sensor, the amount of compensation recorded for each interpolation cycle may be used.

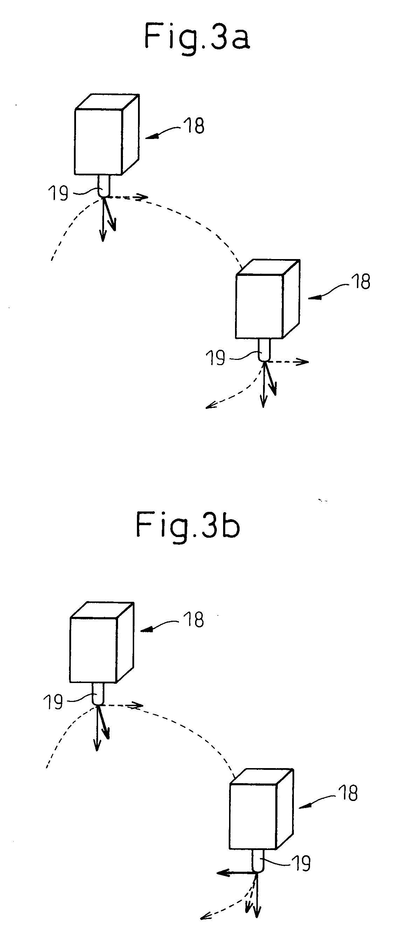

If the tool 18 of the machining robot 1 is, for example, a grinder, it is preferable to employ a conversion matrix that converts the current to the force/moment in a coordinate system defined with respect to the tool 18 (see Figure 3a). In addition, if the tool 18 is used, for example, for friction welding, it is advantageous to employ a conversion matrix that converts the current to the force/moment in a coordinate system defined based on the moving direction of the forward end point of the tool 18 (see Figure 3b).

Then, the force/moment calculation unit 23 acquires dynamics parameters of the machining robot 1 from the parameter storage unit 21. Based on the force and/or moment acting on the tool 18 and the dynamics parameters, the force/moment calculation unit 23 calculates the force and/or moment acting on each joint axis of the robot 1. In this case, the force/moment calculation unit 23 calculates a backward routine according to a Newton-Euler method.

Then, the deflection calculation unit 25 acquires the spring constant of each joint axis of the robot 1 from the parameter storage unit 21. Then, based on the force and/or moment and the spring constant, the deflection calculation unit 25 calculates the deflection for each joint axis.

Then, the compensation amount calculation unit 26 calculates for each joint axis the position command compensation amount Δu(i) that compensates for the calculated deflection (step 109). In a typical embodiment, the compensation amount Δu(i) is equal in magnitude but opposite in direction to the amount of deflection of the joint axis. Alternatively, the amount of compensation for all the joint axes may be calculated in an repetitive fashion so that the amount of displacement of the forward end point of the tool 18 decreases as a whole when the deflections of all the joint axes are considered.

After that, as can be seen from Figure 1, a correcting means 28 in the control apparatus 10 adds the position command u0(i) and the compensation amount Δu(i) for each joint axis (step 110). The corrected position command u(i) thus calculated for each joint axis is supplied to the corresponding joint axis of the robot 1 through the serve control unit 27 (step 111). Then, in step 112, the interpolation-cycle counter i is incremented by 1, and the process from step 106 onward is repeated.

Since the deflection of each joint axis is compensated for, as described above, the position of the robot can be accurately corrected even when the force acting on the tool 18 of the robot 1 is relatively large. This is advantageous especially when the robot 1 performs friction welding or grinding. Accordingly, the present invention can considerably improve the trajectory of the robot.

If the robot 1 is used for friction welding, the workpiece 20 is melted on the downstream side of the tool 18 as viewed in the moving direction of the tool 18, but is not yet melted on the upstream side of the tool 18. Accordingly, when the tool 18 is moved, a force acts on the upstream side of the tool 18 in the moving direction thereof.

However, when the moving speed of the tool 18 is relatively small, the workpiece 20 melts on both the upstream and downstream sides of the tool 18. Therefore, there are cases where very little force acts on the tool 18 when the tool 18 is moved at a relatively slow speed.

In such cases, if the amount of compensation described above is used without any adjustment, the trajectory of the robot 1 may be excessively corrected, resulting in the generation of an incorrect trajectory. Therefore, if the moving speed of the tool 18 is relatively small, the amount of compensation calculated by the compensation amount calculation unit 26 should preferably be adjusted by the compensation amount adjusting unit 29.

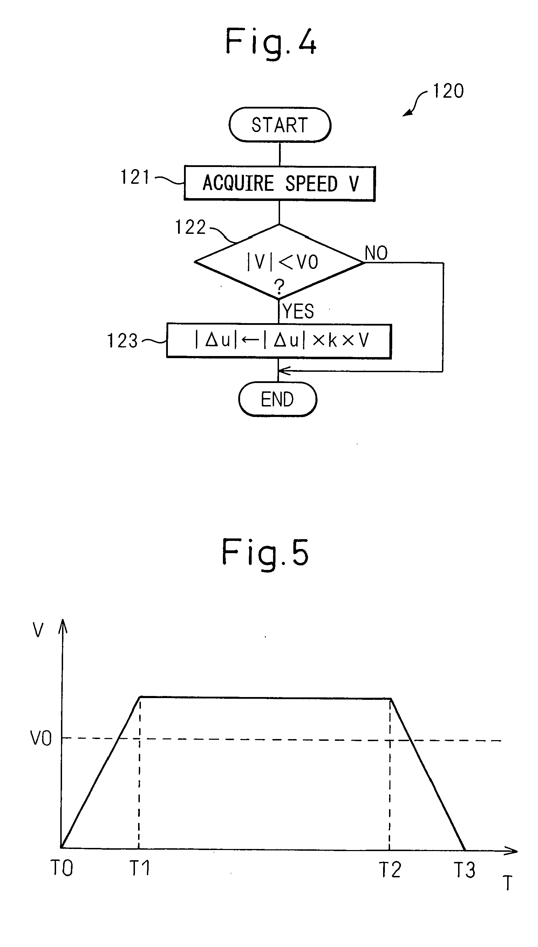

Figure 4 is a diagram showing a flowchart when the amount of compensation is adjusted. In step 121 in Figure 4, the moving speed V of the robot 1 is acquired. The speed command created by the control apparatus 10 may be used as the moving speed V, or the speed of the robot 1 actually measured by a measuring device (not shown) may be used.

Then, in step 122, the absolute value |V| of the moving speed V is compared with a predetermined threshold value V0 (stored in the parameter storage unit 21). The threshold value V0 is a value that defines a limit to the speed so that no effect would be caused to the trajectory if the compensation amount were used without any correction, and is predetermined by experiment, etc. If the moving speed V is smaller than this predetermined threshold value V0, the process proceeds to step 123. Then, in the compensation amount adjusting unit 29, the absolute value |Δu(i)| of the compensation amount Δu(i) is multiplied by a predetermined coefficient k (0 < k ≤ 1) and then by the moving speed V. Assuming that the predetermined threshold value V0 and coefficient k are obtained in advance by experiment, etc. and stored in the parameter storage unit 21. Then, the compensation amount having a new absolute value |Δu (i) | is output as a new compensation amount Δu(i) from the compensation amount calculation unit 26.

The new compensation amount Δu(i) is thus made smaller according to the moving speed V. By employing the new compensation amount Δu(i), the trajectory of the robot 1 is prevented from being corrected excessively and deviating from the correct path.

Figure 5 is a diagram showing the relationship between the time and speed when the robot moves. In Figure 5, the abscissa represents the time, and the ordinate the moving speed of the robot 1. As shown, the robot 1 starts to move at time T0, and the moving speed of the robot 1 gradually increases and almost reaches a maximum at time T1. Thereafter, the robot 1 starts to decelerate at time T2, and the moving speed of the robot 1 gradually decreases from the maximum value and reaches zero at time T3.

In other words, the moving speed of the robot 1 is relatively slow during the period T0 to T1 after the robot 1 has started to move and during the period T2 to T3 before the robot comes to a stop. Therefore, during these periods T0 to T1 and T2 to T3 also, it is preferable to adjust the compensation amount Δu(i).

In these case, the distance from the action start point (corresponding to time T0) or end point (corresponding to time T3) of the robot 1 should be compared with a predetermined threshold value. If the distance from the action start point or end point is smaller than the threshold value, the amount compensation Δu(i) may be adjusted in a manner similar to that described with reference to Figure 4. Alternatively, the time elapsed from the start of the action of the robot 1 or the time to the end of the action may be compared with a predetermined threshold value. It can be understood that in this case also, the trajectory of the robot 1 can be prevented from being corrected excessively.

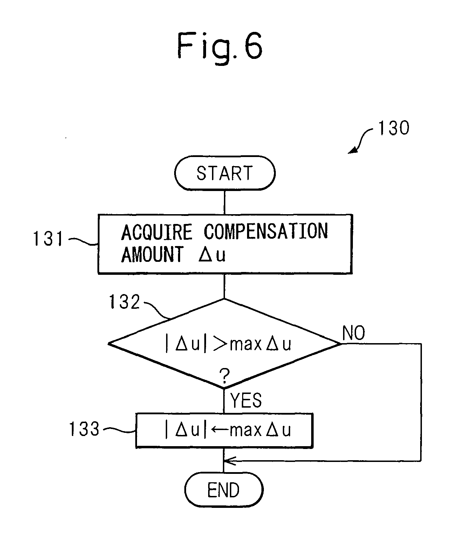

As an alternative embodiment, the compensation amount Δu calculated by the compensation amount calculation unit 26 may be compared with a predetermined maximum value maxΔu. Figure 6 is a diagram showing a flowchart when the amount of compensation is adjusted.

In step 131 in Figure 6, a maximum value limiting unit 30 in the compensation amount adjusting unit 29 acquires the compensation amount Δu calculated by the compensation amount calculation unit 26. Then, the compensation amount Δu is compared with the predetermined maximum value maxΔu. The maximum value maxΔu is a value that defines a limit to the compensation amount so that no effect would be caused to the trajectory if the compensation amount were used without any correction, and is predetermined by experiment, etc. Then, if the absolute value |Δu| of the compensation amount Δu is greater than the maximum value maxΔu, the maximum value maxΔu is set as the absolute value |Δu| of the new compensation amount Δu. When the compensation amount is adjusted in this manner, the trajectory of the robot 1 can likewise be prevented from being corrected excessively. In other words, the maximum value limiting unit 30 serves as a safety device for the robot 1.

In the embodiments described with reference to the drawings, the tool 18 attached to the robot 1 machines the workpiece 20 held in a fixed position. Instead, the tool 18 may be held in a fixed position, and the robot 1 may hold the workpiece 20 and move it relative to the tool 18 to machine the workpiece 20. Further, instead of correcting the position command, the speed command of the robot may be corrected based on the deflection of each joint axis. It will also be appreciated that a robot that performs spot welding or seam welding using the control apparatus of the present invention also falls within the scope of the present invention.

While the present invention has been described with reference to typical embodiments thereof, those skilled in the art will understand that the above and various other changes, omissions, and additions can be made without departing from the scope of the present invention.

## Claims

1. A control apparatus (10) for a machining robot (1) having at least one joint axis and adapted to machine a workpiece (20) by coming into contact with an effector (19) of a tool (18) attached to said machining robot (1) with said workpiece (20), comprising:
detecting means (15) for detecting a force or moment acting between said effector (19) of said tool (18) and said workpiece (20);
converting means (22) for converting the force or moment detected by said detecting means (15) into a force or moment acting on said joint axis of said machining robot (1);
deflection calculating means (25) for calculating a deflection occurring at said joint axis of said machining robot (1) on the basis of the force or moment acting on said joint axis of said machining robot (1) and obtained from said converting means (22); and
correcting means (28) for correcting at least one of a position command or a speed command for said joint axis of said machining robot (1) in such a manner as to compensate for the deflection calculated by said deflection calculating means (25).

2. A control apparatus as claimed in claim 1, wherein said detecting means (15) is a force sensor attached to said tool (18) of said robot.

3. A control apparatus as claimed in claim 1, wherein said tool (18) is equipped with an actuator, and wherein
force feedback or torque feedback provided by said actuator of said tool (18) is used when detecting the force or moment acting between said effector (19) of said tool (18) and said workpiece (20).

4. A control apparatus as claimed in claim 1 or 2, wherein a parameter uniquely defined in relation to a direction in a coordinate system defined with respect to said tool (18) is used when detecting the force or moment acting between said effector (19) of said tool (18) and said workpiece (20).

5. A control apparatus as claimed in claim 1 or 2, wherein a parameter uniquely defined in relation to a direction in a coordinate system defined based on a moving direction of said tool (18) is used when detecting the force or moment acting between said effector (19) of said tool (18) and said workpiece (20).

6. A control apparatus as claimed in any one of claims 1 to 5, wherein if the moving speed of said machining robot (1) is smaller than a threshold value, the amount of compensation by which to correct said position command or speed command is reduced according to said moving speed.

7. A control apparatus as claimed in any one of claims 1 to 5, wherein if a distance from an action start point or end point of said robot is smaller than a corresponding threshold value, the amount of compensation by which to correct said position command or speed command is reduced according to said distance.

8. A control apparatus as claimed in any one of claims 1 to 5, wherein if a length of time elapsed from an action start time or a length of time until an action end time of said robot is smaller than a corresponding threshold value, the amount of compensation by which to correct said position command or speed command is reduced according to said length of time.

9. A control apparatus as claimed in any one of claims 1 to 5, further comprising compensation amount maximum value limiting means (30) for limiting a maximum limit value for the amount of compensation by which to correct said position command or speed command.
